# EUROPÄISCHE PATENTANMELDUNG

(11) **EP 2 770 383 A1**
(43) Veröffentlichungstag der Anmeldung: **27.08.2014**
(21) Anmeldenummer: 13156304.1
(22) Anmeldetag: 22.02.2013
(51) Int. Cl.: G05B 19/042

(54) **Diagnoseverfahren für ein Feldbussystem und Industrieanlage**

(71) Anmelder: Siemens Aktiengesellschaft, 80333 München (DE)
(72) Erfinder: Subramanian, Maarten, 90403 Nürnberg (DE)

(57) **Zusammenfassung**

Die Erfindung betrifft ein Diagnoseverfahren für ein Feldbussystem (1), in dem Busteilnehmer (21,22,23,24) über einen Feldbus (20) Daten gemäß einem vorgegebenen Kommunikationsprotokoll nach dem Master-Slave-Prinzip austauschen, wobei der Datenaustausch in Form von Datenpaketen (D1,D2,D3,D4) erfolgt, mit den Verfahrensschritten:
● Überwachen der Datenpakete, die zwischen den Busteilnehmern (21,22,23,24) über den Feldbus (20) übertragen werden,
● Analysieren der Datenpakete (D1,D2,D3,D4), wobei die Datenpakete (D1,D2,D3,D4) daraufhin untersucht werden, ob es eine Identifizierungsanfrage eines Masters an einen Slave ist,
● nach einer erkannten Identifizierungsanfrage, wird aus dem die Identifizierungsanfrage aufweisenden Datenpaket (D4) ein Teilnehmerparameter (39) selektiert, welcher den angefragten Busteilnehmer (24) identifiziert,
● Absenden einer Diagnosemeldung (42) an einen Betreiber des Feldbussystems (1) um auf eine Störung des jeweiligen Busteilnehmers (24) aufmerksam zu machen.

## Beschreibung

Die Erfindung betrifft ein Diagnoseverfahren für ein Feldbussystem, in dem Busteilnehmer über einen Feldbus Daten gemäß einem vorgegebenen Kommunikationsprotokoll nach dem Master-Slave-Prinzip austauschen, wobei der Datenaustausch in Form von Datenpaketen erfolgt, mit den Schritten: Überwachen der Datenpakete, die zwischen den Busteilnehmern über den Feldbus übertragen werden und Analysieren der Datenpakete.

Ein derartiges Verfahren ist aus der EP 1 919 132 A1 bekannt.

Wird eine große industrielle Produktionsanlage mit Automatisierungskomponenten, beispielsweise mit dem genannten Feldbussystem betrieben, so ist es wichtig, mögliche Stillstandszeiten von Anlagenteilen so gering wie möglich zu halten. Demnach ist es von Vorteil, wenn bei einem Ausfall eines Gerätes sofort der dazugehörige Ansprechpartner kontaktiert wird.

In der Praxis wurde bisher durch großen Projektierungs- und Planungsaufwand erreicht, dass bei einem Ausfall eines Gerätes eine Meldung an beispielsweise ein Bedien- und Beobachtungssystem abgesetzt wird. Daraufhin kann ein Anlagenfahrer den Fehler erkennen und das Problem weiterreichen. Gegebenenfalls wird auch ein Alarm an einer zentralen Stelle ausgelöst. Dieser Lösungsweg bringt jedoch einen sehr hohen Projektierungsaufwand mit sich.

Es ist Aufgabe der vorliegenden Erfindung den aus der Praxis bekannten Lösungsweg oder den in dem Dokument EP 1 919 132 A1 beschriebenen Lösungsweg zu vereinfachen und zu optimieren.

Die Aufgabe wird durch ein Diagnoseverfahren für ein Feldbussystem, in dem Busteilnehmer über einen Feldbus Daten gemäß einem vorgegebenen Kommunikationsprotokoll nach dem Master-Slave-Prinzip austauschen dadurch gelöst, dass bei einem Austausch in Form von Datenpaketen folgende verfahrensgemäße Schritte durchgeführt werden: Überwachen der Datenpakete, die zwischen den Busteilnehmern über den Feldbus übertragen werden, Analysieren der Datenpakete, wobei die Datenpakete daraufhin untersucht werden, ob es eine Identifizierungsanfrage eines Masters an einen Slave ist, nach einer erkannten Identifizierungsanfrage, wird aus dem die Identifizierungsfrage aufweisenden Datenpaket ein Teilnehmerparameter selektiert, welcher den angefragten Busteilnehmer identifiziert, Absenden einer Diagnosemeldung an einen Betreiber des Feldbussystems um auf eine Störung des jeweiligen Busteilnehmers aufmerksam zu machen. Für den Fall, dass ein Kommunikationsprotokoll nach dem Standard IEEE 802.3 bzw. insbesondere nach der Norm IEC61158 verwendet wird, entspricht dem Datenpaket mit der Identifizierungsanfrage einem Identify Request Paket. Ein derartiges Identify Request Paket wird beispielsweise von einem Profinet-Teilnehmer immer dann versendet, wenn der zuvor angefragte Teilnehmer nicht mehr reagiert. Das bedeutet falls ein Busteilnehmer ausgefallen ist und beispielsweise ein Automatisierungsgerät das Identify Request Paket versendet hat, kann dies auch ein anderer beliebiger Busteilnehmer "mithören". Die Lösung ist daher universell einsetzbar und muss nicht extra konfiguriert werden und kann auch in einer bestehenden Anlage im Nachhinein installiert werden. Als weitere Vorteile werden angesehen, dass keine Konfiguration notwendig ist, womit Geräte-Beschreibungsdateien nicht eingelesen werden müssen und das System nicht extra Inbetrieb genommen werden muss. Es müssen keine Daten gespeichert werden, es wird keine Aufzeichnung von Datenpaketen durchgeführt, die Analyse findet quasi in Echtzeit statt. Es muss kein zyklischer Zustand überwacht werden oder gar ein Zustandsvektor erzeugt werden, so wie es in EP 1 919 132 A1 der Fall ist.

Vorteilhafter Weise kann das Datenpaket mit der Identifizierungsanfrage, also dem Identify Request, von jedem Busteilnehmer gelesen werden.

Von besonderem Vorteil ist, dass das Verfahren als ein computerimplementiertes Programmprodukt in einem beliebigen Busteilnehmer integriert werden kann.

Weiterhin kann das Verfahren als ein computerimplementiertes Programmprodukt in einem Busteilnehmer, welcher als ein Leitrechner betrieben wird, integriert werden. Bei Feldbussystemen mit den Namen Profibus, Interbus, Controllnet oder Profinet kann das Verfahren mit Vorteil angewendet werden.

Vorzugsweise wird das Verfahren an einem Feldbussystem, wobei das Feldbussystem und die Busteilnehmer in einer automatisierten Industrieanlage betrieben werden, ausgeführt.

Von ganz erheblichem Vorteil ist es, wenn bei dem erfassten Datenpaket mit der Identifizierungsanfrage der Teilnehmerparameter als ein Klartextdatum vorliegt und einer Anlagenteilbeschreibung entspricht. In dem Datenpaket, vorzugsweise in einen DCP (Dynamic Configuration Protocol) -Datenpaket, ist der Teilnehmerparameter, welcher den Busteilnehmer zweifelsfrei identifiziert, vorzugsweise als ein Klartextname angegeben, wie z.B. "Walzeinrichtung 1", "Pressenvorrichtung 7", "Einlaufbehälter 27" usw..

Im Hinblick auf ein Hochfahren einer Industrieanlage oder ein Hochfahren des Feldbussystems ist es von Vorteil, wenn der Verfahrensschritt Absenden einer Diagnosemeldung an einen Betreiber des Feldbussystems um auf eine Störung des jeweiligen Busteilnehmers aufmerksam zu machen, für die Zeitdauer einer Initialisierungsphase des Feldbussystems unterdrückt wird. Bei einem Hochfahren eines Feldbussystems, also dem erstmaligen Einschalten, kann es durchaus sein, dass vermehrt Datenpakete mit Identifizierungsanfragen verschickt werden, um nicht unnötig Störmeldungen zu generieren werden das Absenden von Störmeldungen für diesen Zeitraum bis zu einem eingeschwungenen Zustand des Feldbussystems unterdrückt.

Die eingangs genannte Aufgabe wird auch durch eine Industrieanlage mit einem Feldbus mit daran angeschlossenen Busteilnehmern, welche über den Feldbus Daten gemäß einem vorgegebenen Kommunikationsprotokoll nach dem Master-Slave-Prinzip austauschen, wobei der Datenaustausch in Form von Datenpaketen erfolgt, wobei ein Busteilnehmer derart ausgestaltet ist, dass er die Datenpakete, die zwischen den Busteilnehmern über den Feldbus übertragen werden, mit einer Überwachungseinheit überwacht und weiterhin dazu ausgestaltet ist, die Datenpakete zu analysieren, wobei die Datenpakete daraufhin untersucht werden, ob es eine Identifizierungsanfrage eines Masters an einen Slave ist, weiterhin ist der eine Busteilnehmer dazu ausgestaltet, nach einer erkannten Identifizierungsanfrage, aus dem die Identifizierungsanfrage aufweisenden Datenpaket ein Teilnehmerparameter zu selektieren, welche den angefragten Busteilnehmer identifiziert, weiterhin dazu ausgestaltet über einen Meldungsgenerator eine Diagnosemeldung an einen Betreiber der Industrieanlage abzusenden um auf eine Störung des jeweiligen Busteilnehmers aufmerksam zu machen.

In einer vorteilhaften Ausgestaltung ist die Industrieanlage mit einer Unterdrückungseinheit ausgestattet, wodurch das Absenden einer Diagnosemeldung an einen Betreiber des Feldbussystems um auf eine Störung des jeweiligen Busteilnehmers aufmerksam zu machen, für die Zeitdauer einer Initialisierungsphase des Feldbussystems unterdrückt wird.

Es könnte auch beispielsweise für die Kennung eines Starts einer Initialisierungsphase ein bestimmtes Datenpaket und für das Ende wiederum ein bestimmtes Datenpaket verschickt werden. Diese bestimmten Datenpakete könnten die Unterdrückungseinheit aktivieren und deaktivieren.

Die Zeichnung zeigt ein Ausführungsbeispiel. Es zeigt
- FIG 1: ein Feldbussystem mit Busteilnehmern und die
- FIG 2: ein Telegramm nach dem DCP (Dynamic Configuration Protocol) Protokoll.

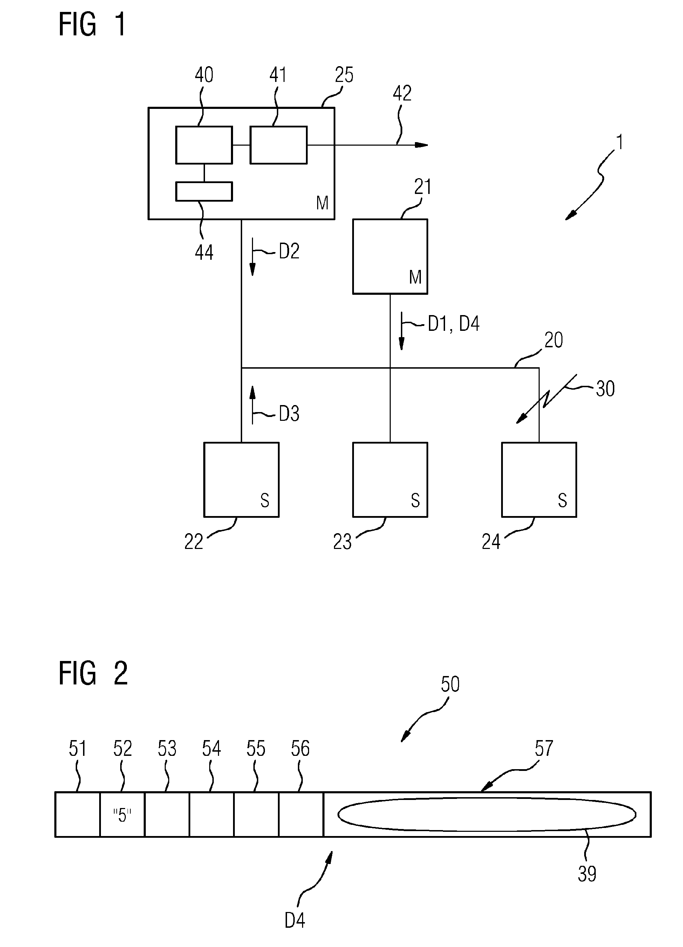

Gemäß FIG 1 ist ein Feldbussystem 1 mit einem ersten Busteilnehmer 21, einem zweiten Busteilnehmer 22, einem dritten Busteilnehmer 23, einem vierten Busteilnehmer 24 und einem fünften Busteilnehmer 25, welcher gleichzeitig als ein Leitrechner konfiguriert ist, dargestellt. Die genannten Busteilnehmer sind über einen Feldbus 20 miteinander verbunden und können Daten gemäß dem Kommunikationsprotokoll nach der Norm IEC61158 austauschen, wobei der Datenaustausch in Form von Datenpaketen D1,D2,D3,D4 erfolgt.

Der erste Busteilnehmer 21 ist als ein Master M ausgebildet. Der zweite Busteilnehmer 22, der dritte Busteilnehmer 23 und der vierte Busteilnehmer 24 ist jeweils als ein Slave S ausgestaltet. Der ebenfalls an den Feldbus angeschlossene Leitrechner, also der fünfte Busteilnehmer 25, ist als ein Master M ausgestaltet.

Zur Überwachung der Datenpakete weist der fünfte Busteilnehmer 25 eine Überwachungseinheit 40 auf. Mit dieser Überwachungseinheit 40 werden die über den Feldbus 20 versendeten Datenpakete D1,D2,D3,D4 überwacht und analysiert, wobei die Datenpakete D1,D2,D3,D4 daraufhin untersucht werden, ob es eine Identifizierungsanfrage eines Masters M an einen Slave S ist.

Hat die Überwachungseinheit 40 eine Identifizierungsanfrage erkannt, wird aus dem die Identifizierungsanfrage aufweisenden Datenpaket D4 (siehe FIG 2) ein Teilnehmerparameter 39 selektiert, welcher den angefragten vierten Busteilnehmer 24 identifiziert.

Beispielsweise sendet der als Master M ausgestaltete erste Busteilnehmer 21 ein erstes Datenpaket D1 über den Feldbus 20 an den vierten Busteilnehmer 24. Aufgrund einer Störung 30 kann der vierte Busteilnehmer 24 nicht auf das erste Datenpaket D1 antworten. Das erste Datenpaket D1 enthielt beispielsweise eine Anfrage von Eingabedaten. Da nun aber auf diese Anfrage von Eingabedaten durch den vierten Busteilnehmer 24 nicht geantwortet wurde, welches mit hoher Wahrscheinlichkeit auf eine Störung schließen lässt, schickt der erste Busteilnehmer 21 ein viertes Datenpaket D4 mit einer speziellen Identifizierungsanfrage für diesen vierten Busteilnehmer 24 über den Feldbus 20. Das vierte Datenpaket D4 mit der enthaltenen Identifizierungsanfrage für den vierten Busteilnehmer 24 wird als ein Broadcast auf den Feldbus 20 geschickt, dass bedeutet alle Busteilnehmer 22,23,25 können dieses vierte Datenpaket lesen.

Der fünfte Busteilnehmer 25, also der Leitrechner, ist mit der Überwachungseinheit 40 derart ausgestaltet, dass er auch das vierte Datenpaket D4 lesen und analysieren kann. Die Überwachungseinheit 40 ist dazu ausgestaltet, dass vierte Datenpaket D4 daraufhin zu untersuchen, ob es eine Identifizierungsanfrage eines Masters M an einen Slave S ist. Bei dem vierten Datenpaket D4 ist dies der Fall.

Die Überwachungseinheit 40 kann dies anhand des Datenpaketes D4 erkennen, weil (siehe FIG 2) eine Service ID 52 auf einen Wert "5" vorbelegt ist. Dieser Wert steht dafür, dass es sich um einen Identify Request handelt. Die Überwachungseinheit selektiert dann den Teilnehmerparameter 39, welches ein Text String in Klartextanzeige ist und beispielsweise "vierter Busteilnehmer unten rechts" lautet. Diesen Teilnehmerparameter 39 reicht die Überwachungseinheit 40 an einen Meldungsgenerator 41 weiter. Der Meldungsgenerator 41 wird daraufhin eine Diagnosemeldung 42 absetzen. Die Diagnosemeldung 42 enthält den Teilnehmerparameter 39 und kann beispielsweise per E-Mail oder SMS an den zugehörigen Anlagenbetreiber abgesendet werden.

Eine Datenanfrage mit einem zweiten Datenpaket D2 des fünften Busteilnehmers 25 an den zweiten Busteilnehmer 22 wird innerhalb einer vorgesehen Zeit ordnungsgemäß mit dem dritten Datenpaket D3 quittiert, so dass hier keine Identifizierungsanfrage abgesetzt werden muss.

FIG 2 zeigt ein Telegramm 50 nach dem DCP (Dynamic Configuration Protocol), welches einem Datenpaket entspricht. Das DCP (Dynamic Configuration Protocol) hat die Aufgabe, die Adressen und Namen in einen Profinet IO System den einzelnen Teilnehmern zu verteilen. Von links nach rechts ist das Telegramm wie folgt aufgebaut. Eine 2 Byte lange Frame ID 51 steht zu Anfang des Telegrammes 50, eine 1 Byte große Service ID 52 kann die Werte "1", "2", und "5" annehmen, wobei "1" = Get, "2" = Set, "5" = Identify entspricht. Ein 1 Byte großes Feld für einen Servicetyp 53, eine 5 Byte große Identifikationsnummer 54 eine 2 Byte große Verzögerungszeit 55 auch bekannt als ein Response Delay, und ein Feld 2 Byte lang, für eine Datenlänge 56, welche die Anzahl der Bytes in den nachfolgenden Blöcken anzeigt.

Die nachfolgenden Blöcke enthalten demnach jeweils 1 Byte für Geräteeigenschaften und Optionen für den Namen des Gerätes, wobei das Hauptaugenmerk auf einer Bytekette liegt, welche in der Regel als ein Textstring also im Klartext den Profinetnamen des jeweiligen Teilnehmers, wie z.B. "Anlagenteil unten rechts" aufweist.

Dieser Text kann vorzugsweise als eine Störmeldung in Form von SMS oder E-Mail an den Anlagenbetreiber gesendet werden.

Bei diesem Verfahren wird als besonders vorteilhaft angesehen, dass durch die bloße Überwachung der Datenpakete D1,D2, D3,D4 daraufhin, dass ein Identification Request auftaucht, es möglich ist, ohne eine Konfiguration, ohne dass Einlesen von Gerätebeschreibungsdateien, ohne eine Aufzeichnung von Datenpaketen, ohne die Überwachung eines zyklischen Zustands oder das Erstellen eines Zustandsvektor, eine automatische Weiterleitung einer Meldung für einen defekten Busteilnehmers zu erzeugen.

Auch wird als Vorteil angesehen, dass der Nutzer einer Anlage kein separates Programm starten muss und die Bedeutung eines Zustandes selber auswerten muss. Es wird für einen Benutzer kein grafisches User Interface benötigt. Bei einem Auftreten eines Fehlers wird das Feldbussystem von sich aus aktiv und benachrichtigt den Anlagenbetreiber. Das vorgestellte Feldbussystem muss nicht zyklisch arbeiten. Denn der Identify Request wird nur verschickt, wenn der jeweilige Busteilnehmer nicht mehr erreichbar ist und somit höchstwahrscheinlich ein Fehler aufgetreten ist. Das vorgestellte Verfahren insbesondere das in die Busteilnehmer zu implementierende Computerprogrammprodukt kommt mit wenig Ressourcen aus und kann daher auch in kleinen Netzwerkknoten angewendet werden. Dieser verfahrensgemäße Protokolldienst ist ein Dienst, welcher im Hintergrund läuft und bei erst einem Defekt/Ausfall eines Busteilnehmers aktiv wird und eine Information, beispielsweise über E-Mail oder andere Kommunikationswege ausgibt.

## Patentansprüche

1. Diagnoseverfahren für ein Feldbussystem (1), in dem Busteilnehmer (21,22,23,24) über einen Feldbus (20) Daten gemäß einem vorgegebenen Kommunikationsprotokoll nach dem Master-Slave-Prinzip austauschen, wobei der Datenaustausch in Form von Datenpaketen (D1,D2,D3,D4) erfolgt, mit den Verfahrensschritten:
● Überwachen der Datenpakete, die zwischen den Busteilnehmern (21,22,23,24) über den Feldbus (20) übertragen werden,
● Analysieren der Datenpakete (D1,D2,D3,D4), wobei die Datenpakete (D1,D2,D3,D4) daraufhin untersucht werden, ob es eine Identifizierungsanfrage eines Masters an einen Slave ist,
● nach einer erkannten Identifizierungsanfrage, wird aus dem die Identifizierungsanfrage aufweisenden Datenpaket (D4) ein Teilnehmerparameter (39) selektiert, welcher den angefragten Busteilnehmer (24) identifiziert,
● Absenden einer Diagnosemeldung (42) an einen Betreiber des Feldbussystems (1) um auf eine Störung des jeweiligen Busteilnehmers (24) aufmerksam zu machen.

2. Diagnoseverfahren nach Anspruch 1, wobei das Datenpaket (D4) mit der Identifizierungsanfrage von jedem Busteilnehmer (21,22,23,24) gelesen wird.

3. Diagnoseverfahren nach Anspruch 2, wobei das Verfahren als ein Computer implementiertes Programmprodukt in einen beliebigen Busteilnehmer (21,22,23,24)integriert wird.

4. Diagnoseverfahren nach Anspruch 2, wobei das Verfahren als ein Computer implementiertes Programmprodukt in einen Busteilnehmer, welcher als ein Leitrechner betrieben wird, integriert wird.

5. Diagnoseverfahren nach einem der Ansprüche 1 bis 4, wobei als Kommunikationsprotokoll das nach IEEE 802.3 spezifizierte Protokoll, insbesondere ein Dynamic Configuration Protocol nach der Norm IEC 61158 verwendet wird.

6. Diagnoseverfahren nach einem der Ansprüche 1 bis 5, wobei das Feldbussystem (1) und die Busteilnehmer (21,22,23,24) in einer automatisierten Industrieanlage betrieben werden.

7. Diagnoseverfahren nach einem der Ansprüche 1 bis 6, wobei der Teilnehmerparameter (39) als ein Klartextdatum vorliegt und einer Anlagenteilbeschreibung entspricht.

8. Diagnoseverfahren nach einem der Ansprüche 1 bis 7, wobei das Absenden einer Diagnosemeldung (42) an einen Betreiber des Feldbussystems (1) um auf eine Störung des jeweiligen Busteilnehmers (24) aufmerksam zu machen für die Zeitdauer einer Initialisierungsphase des Feldbussystems (1) unterdrückt wird.

9. Industrieanlage mit einem Feldbus (20) mit daran angeschlossenen Busteilnehmern (21,22,23,24), welche über den Feldbus (20) Daten gemäß einem vorgegebenen Kommunikationsprotokoll nach dem Master-Slave-Prinzip austauschen, wobei der Datenaustausch in Form von Datenpaketen (D1,D2,D3,D4) erfolgt, wobei ein Busteilnehmern (21,22,23,24) derart ausgestaltet ist, dass er die Datenpakete (D1,D2,D3,D4), die zwischen den Busteilnehmern (21,22,23,24) über den Feldbus (20) übertragen werden, mit einer Überwachungseinheit (40) überwacht und weiterhin dazu ausgestaltet ist die Datenpakete (D1,D2,D3,D4) zu analysieren, wobei die Datenpakete (D1,D2, D3,D4) daraufhin untersucht werden, ob es eine Identifizierungsanfrage eines Masters an einen Slave ist, weiterhin ist der eine Busteilnehmer dazu ausgestaltet nach einer erkannten Identifizierungsanfrage, aus dem die Identifizierungsanfrage aufweisenden Datenpaket (D4) ein Teilnehmerparameter (39) zu selektieren, welche den angefragten Busteilnehmer (24) identifiziert, weiterhin dazu ausgestaltet über einen Meldungsgenerator (41) eine Diagnosemeldung (42) an einen Betreiber der Industrieanlage abzusenden um auf eine Störung des jeweiligen Busteilnehmers aufmerksam zu machen.

10. Industrieanlage nach Anspruch 9, mit einer Unterdrückungseinheit (44), wodurch das Absenden einer Diagnosemeldung (42) an einen Betreiber des Feldbussystems (1) um auf eine Störung des jeweiligen Busteilnehmers (24) aufmerksam zu machen für die Zeitdauer einer Initialisierungsphase des Feldbussystems (1) unterdrückt wird.
